# EUROPEAN PATENT SPECIFICATION

(11) **EP 2 853 969 B1**
(45) Date of publication and mention of the grant of the patent: **17.06.2020**
(21) Application number: 13186392.0
(22) Date of filing: 27.09.2013
(51) Int. Cl.: G05B 23/02

(54) **An alarm management system and a method therefor**
Alarmverwaltungssystem und Verfahren dafür
Système de gestion d'alarme et procédé associé

(43) Date of publication of application: 01.04.2015
(73) Proprietor: Siemens Aktiengesellschaft, 80333 München (DE)
(72) Inventor: N, Aravind, 560070 Bangalore (IN)
(74) Representative: Isarpatent

(56) References cited:
- EP-A1- 2 623 679
- WO-A1-2005/109122
- US-A1- 2002 077 711
- US-A1- 2007 005 266
- US-A1- 2008 255 681
- US-A1- 2011 144 776
- US-B1- 6 774 786

## Description

The present invention generally relates to control systems and more particularly, to an alarm management system and a method therefor for use in a control system.

Alarm management systems are widely used in conjunction with various control systems used in a wide variety of application areas, particularly, in technical installations such as industrial automation systems. Such industrial automation systems usually include one or more human-machine interface devices to display and control process data related to industrial equipment. Therefore, the industrial equipments represent a controlled system executing a controlled process while the industrial automation system represents a control system. The industrial automation system regulating controlled systems / processes in an industrial plant is just one example of various control systems conducive to the application of the present invention. Another prominent example is building technologies wherein control systems are deployed for regulating various environmental parameters related to a building as well as security and surveillance thereof.

Human-machine interface devices act as important aids for operating personnel to interact with the control system. To this end the human-machine interface device generally has specific hardware, e.g. a touch-screen and specific software is also operated therein. They provide functions, which enhance user-friendliness, quality and safety of operation by an operator. Thus, human-machine interface devices can be used to visualize, control, configure, and generate interactive process maps related to the industrial equipment. On the one hand, this allows the selective display of responses of the industrial equipment, generally in the form of measured values and messages. On the other hand, the customized pre-definition of control operations and data inputs allow the industrial equipment to be switched to required states. It should be noted that the term human-machine interface device is a generic term covering all components associated with this group of devices, which can be stationary or mobile.

An important technical feature of various control systems is provision of an alarm management system. The alarm management system serves to alert an operator whenever a control parameter being regulated through the control system breaches a stipulated boundary condition.

The performance of an alarm management system is gauged, among other parameters, based on metrics such as maximum manageable alarms per operator per unit time, timely remediation of alarm conditions, and so on.

In the state-of-the-art, various alarm management systems and methods have been proposed but each available alarm management system and method suffers for one or another limitation. In general, the state-of-the-art alarm management techniques require an operator to have a *priori* knowledge about various control parameters that should be investigated for remediation of any given alarm condition. This necessitates significant amount of training and knowledge transfer before an operator may be assigned on-field responsibility. Moreover, the operator should not only be knowledgeable about various control parameters that need to be investigated but she/he should also be familiar with various user interfaces deployed on a human-machine interface device and individual control parameters provided therein. Over a prolonged period of time, while the operator may become familiar with placement of various control parameters on numerous user interfaces provided in the human-machine interface device, it still is a time-consuming task to navigate to individual user interfaces and alter the relevant control parameter provided therein. It is needless to mention that in case of time critical alarms, time is of essence and the remediation actions should be performed in the fastest manner possible.

The state-of-the-art alarm management techniques further suffer from information overflow and alarm flooding often confuses the operator. In such case, some critical alarms may get obscured by hundreds of other alarms and hence, missed by the operator.

In the published patent prior art, the following documents relate to the technological background of the present invention:
D1 US 2002/077711 A1 (NIXON M J ET AL) 20 June 2002
D2 US 2007/005266 A1 (BLEVINS T L ET AL) 4 January 2007
D3 US 2011/144776 A1 (HOLLENDER M ET AL) 16 June 2011
D4 WO 2005/109122 A1 (GILBERT SET AL) 17 November 2005
D5 US 2008/255681 A1 (SCOTT C A ET AL) 16 October 2008
D6 EP 2 623 679 A1 (SHIBAMORI K ET AL) 7 August 2013
D7 US 6 774 786 B1 (HAVEKOST R B ET AL) 10 August 2004

Document D1 discloses a coordinated system that uses multiple types of data from different and divergent data sources to assist in and enhance asset utilization in a process control plant or environment. An integrated alarm application may produce user displays which provide information on the received alarms, provide an alarm banner integrating the alarms, etc. Each alarm in the alarm banner may also include an information button which may be selected by a user to generate a pop-up window containing more detailed information relating to the particular alarm. The alarm banner may provide another pop-up window which displays one or more response categories which may facilitate the user's understanding of how a particular alarm should be addressed and within what time frame the alarm should be addressed. For example, the pop-up window may indicate that a particular device is no longer communicating, that the device has failed, that the device needs maintenance immediately, or that the device requires maintenance or some other attention soon as response categories.

A similar technology is disclosed in document D7. In the system of document D7, a primary control display associated with an alarm is presented to the user to help the user understand or see the source of the alarm of functionality of the hardware or software element associated with the alarm, such as a module, process loop, device, node, area, etc. from which the alarm was generated or with which the alarm is associated. A primary control display may be for example a physical picture of a device. Documents D2-D6 disclose further technological background art in alarm management systems.

In light of the foregoing, there is a need for an alarm management system and method that facilitates easy handling of alarms while reducing dependence of manual training and skill development of individual operators.

It is therefore an object of the present invention to provide an alarm management system and a method therefor to facilitate efficient and convenient remediation of alarms conditions occurring in a control system.

The object is achieved by providing an alarm management system according to claim 1 and a method for operating the same according to claim 5. Further embodiments and improvements of the present invention are addressed in respective dependent claims. Hereinafter, aspects of the invention which contribute to the understanding of the invention are listed separately before coming to a detailed description of the embodiments of the invention with reference to the attached drawings. However, it should be noted that the invention is defined by the attached claims and all examples/aspects which are not covered by these claims are also to be understood as contributing to the understanding of the invention.

The underlying concept of the present invention is to define one or more logical control objects for regulating one or more control parameters in order to address an individual alarm condition and making these logical control objects easily operable directly from within an alarm display interface used to display alarm messages to an operator of the control system. The one or more logical control objects may be graphical objects linked to the one or more control parameters. On the one hand, the present invention facilitates reducing dependence on manual training and skill development of individual operators because the alarm management system and the method of the present invention provides a list of control parameters that should be acted on in order to remediate the alarm condition; on the other hand, the techniques of the present invention aid in time efficient remediation of various alarm conditions since one or more logical control objects for regulating the control parameters to remediate the alarm condition are directly accessible from the alarm display interface; and hence, the operator does not need to navigate through a myriad of user interfaces while searching for relevant control parameters to act on.

In a first aspect of the present invention, an alarm management system suitable for use in a control system is provided. The control system is configured for regulating one or more control parameters corresponding to at least one controlled system and/or controlled process in a technical installation. The control system is configured for generating one or more alarm messages, wherein each alarm message is assigned an alarm code selected from a set of predefined alarm codes. The alarm management system comprises a configuration module, a correlation module, and a rendering module. The configuration module is adapted for defining one or more logical control objects for regulating the control parameters, and further for associating one or more logical control objects with at least one alarm code based on a user input therefor. The correlation module is configured for maintaining information related to the alarm code along with corresponding logical control objects. The rendering module is configured for receiving at least one alarm message from the control system, and rendering the alarm message, along with corresponding logical control objects based on the alarm code thereof, in an alarm display interface.

In a second aspect of the present invention, a method for alarm management suitable for use in a control system is provided. The control system is in accordance with that described in conjunction with the first aspect of the present invention. According to the method of the present invention, initially, one or more logical control objects are defined for regulating the control parameters and one or more of these logical control objects are associated with at least one alarm code based on a user input therefor. Subsequently, the information related to the alarm code along with corresponding logical control objects is maintained. Finally, at least one alarm message is received from the control system, and rendered, along with corresponding logical control objects based on the alarm code thereof, in an alarm display interface.

Accordingly, the present invention provides an alarm management system and a method therefor that facilitates efficient and convenient remediation of alarm conditions in a control system.

The present invention is further described hereinafter with reference to illustrated embodiments shown in the accompanying drawings, in which:
- FIG 1: illustrates a schematic view of an alarm management system in accordance with an embodiment of the present invention,
- FIG 2: illustrates a schematic view of a first configuration interface in accordance with an embodiment of the present invention,
- FIG 3: illustrates a schematic view of a second configuration interface in accordance with an embodiment of the present invention,
- FIG 4: illustrates a schematic view of a third configuration interface in accordance with an embodiment of the present invention,
- FIG 5: illustrates a brief flowchart for a method for operating an alarm management system in accordance with an embodiment of the present invention,
- FIG 6: illustrates a detailed flowchart for a method for operating an alarm management system in accordance with an embodiment of the present invention,
- FIG 7: illustrates a first alarm display interface in accordance with an embodiment of the present invention, and
- FIG 8: illustrates a second alarm display interface in accordance with an embodiment of the present invention.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

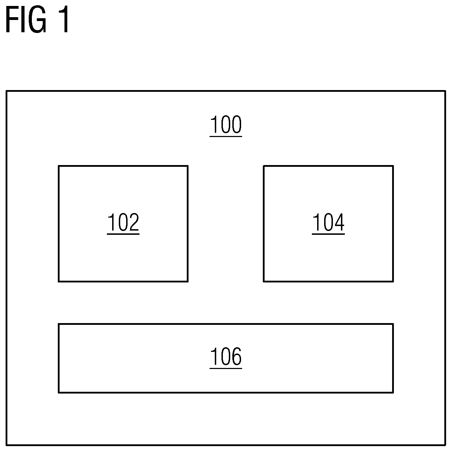

Referring now to FIG 1, a schematic view of an alarm management system 100 is shown in accordance with an embodiment of the present invention.

The alarm management system 100 includes a configuration module 102, a correlation module 104, and a rendering module 106.

The alarm management system 100 is suitable for use in conjunction with a control system. Various control systems in which the alarm management system 100 of the present invention may be used are already indicated in the foregoing description. In general, the alarm management system 100 of the present invention may be used in industrial automation systems, building automation systems, and so on.

As explained earlier, the control systems are configured for regulating one or more control parameters corresponding to at least one controlled system and/or controlled process in a technical installation. The control system is further configured for generating one or more alarm messages.

The alarm management system 100 is configured to handle the alarm messages in such a manner as to provide efficient and convenient remediation thereof.

In accordance with various techniques of the present invention, it is contemplated that each alarm message generated in the control system is assigned an alarm code selected from a set of predefined alarm codes. It should be noted that the control system will generally be configured to generate a finite types of alarms. While the actual number of alarm messages may run into hundreds or thousands or more over a given time period of operation of the control system, the numerous alarms may be mapped to a finite number of types of alarm; each type of alarm can be represented using a distinct alarm code. In the parlance of object-oriented programming, alarm codes are to alarm messages what classes are to objects. For any given alarm code, multiple alarm messages may be generated at different time instances.

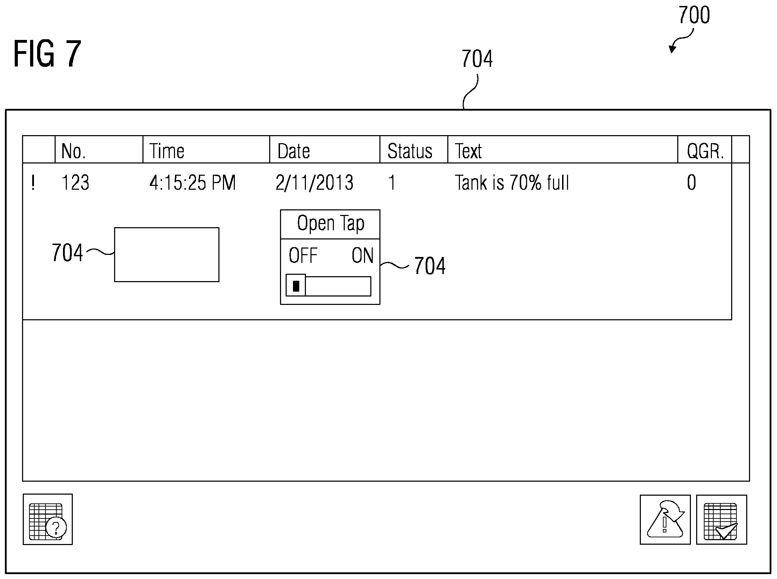

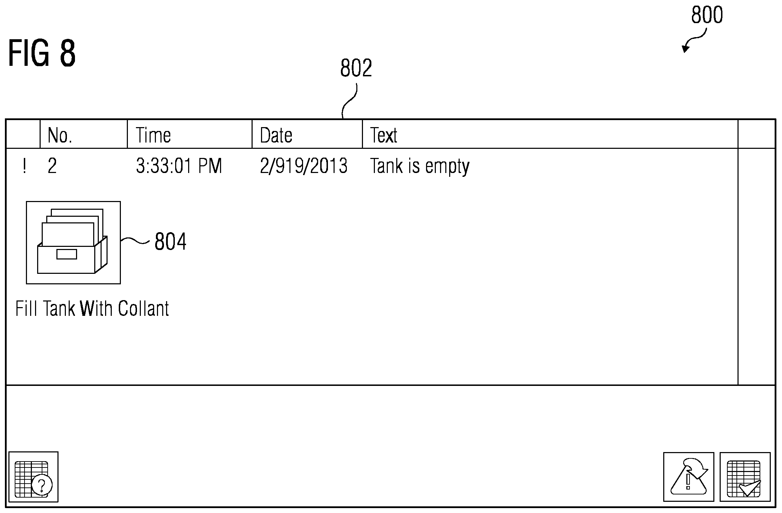

The alarm management system 100 receives the alarm messages generated in the control system and among other things, displays the alarm messages in an alarm display interface (such as those shown in FIGS 7 and 8) displayed on a human-machine interface device such that an operator may take appropriate actions in response to the alarm messages. The alarm display interfaces will be further explained in description provided in conjunction with FIGS 7 and 8.

As mentioned earlier, in accordance with the inventive techniques of the present invention, the alarm management system 100 includes the configuration module 102, the correlation module 104, and the rendering module 106. These modules will now be explained in detail.

The configuration module 102 is adapted for defining one or more logical control objects for regulating one or more control parameters in the control system. It is generally known in field of the invention that one or more graphical objects such as switches, buttons, dials, and so on may be configured for display in a human-machine interface device. Such graphical objects are in turn linked to one or more control parameters being regulated using the control system. Such graphical objects are referred to as logical control objects.

Typically, a runtime project is developed using an engineering station and all desired user interfaces along with logical control objects are designed and developed in the engineering station and then, downloaded onto the human-machine interface device.

In accordance with techniques of the present invention, the configuration module 102 provides one or more configuration interfaces for associating one or more logical control objects with at least one alarm code based on a user input therefor.

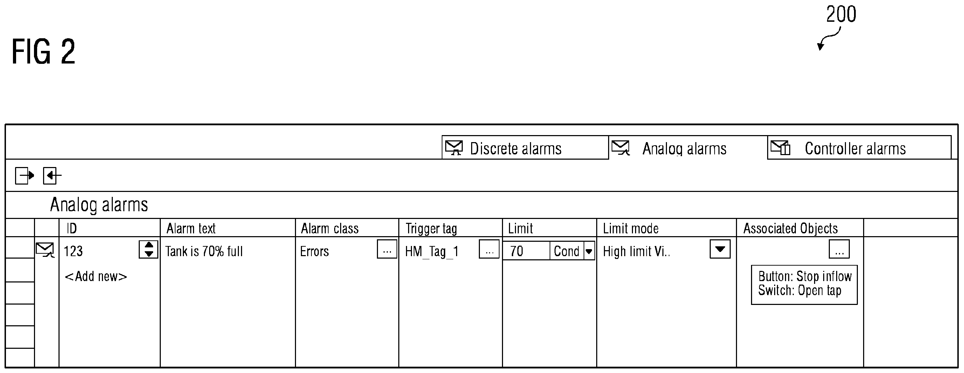

Referring now to FIG 2, one such configuration interface is shown. The configuration interface 200 shown in the adjoining figure is suitable for associating one or more alarm codes with one or more logical control objects. As exemplarily shown in the adjoining figure, an alarm code "123" is related to one of the logical control objects already designed and developed in the engineering station.

It should be noted that according to the techniques of the present invention, it is not necessary that only such logical control objects which are included in one of the user interfaces designed for a target human-machine interface device. According to an inventive feature of the present invention, one or more logical control objects may exclusively be designed and developed specifically with the purpose of linking them with alarm codes for speedy alarm remediation. While using the exemplary configuration interface 200, as shown in the adjoining figure, all such logical control objects may be accessed using, for example, a drop-down list irrespective of whether individual logical control objects are included in one or more user interfaces being developed for the target human-machine interface device.

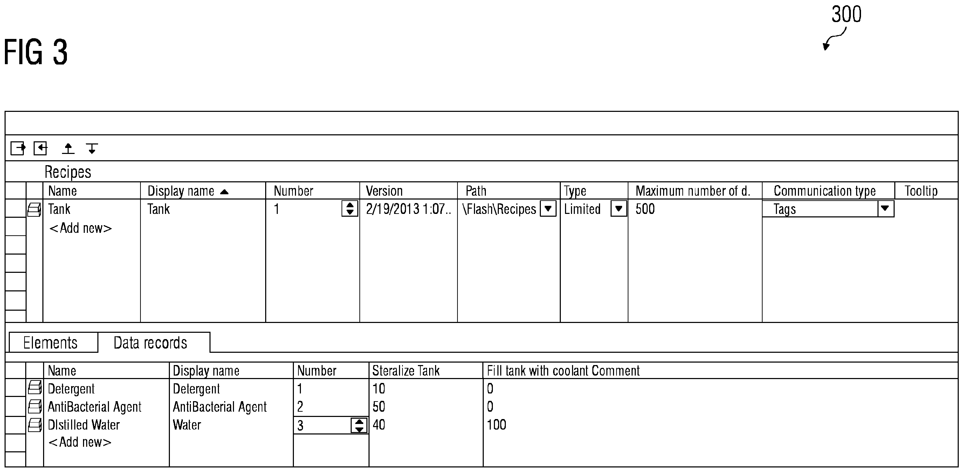

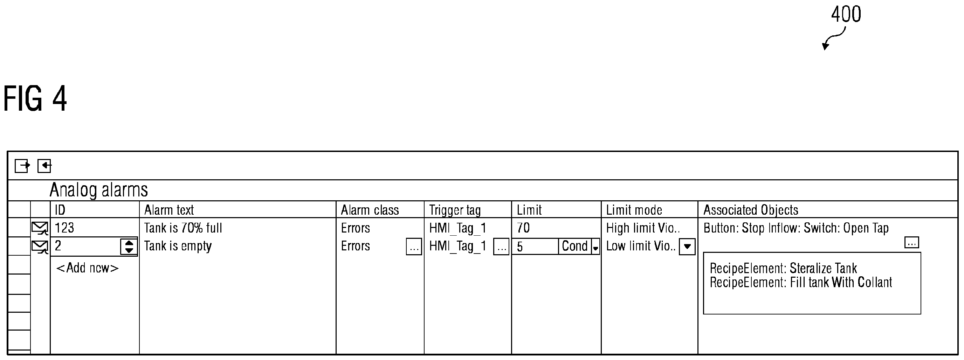

In addition, to the usual logical control objects, as described above, various recipes may also be linked to alarm codes, as will now be described in conjunction with FIGS 3 and 4.

Referring now to FIGS 3 and 4, exemplary configuration interfaces for developing one or more recipes and associating one or more recipes to alarm codes respectively, are shown.

In particular, FIG 3 shows a configuration interface 300 used for defining one or more recipes. In the example shown in the adjoining figure, a recipe named "Tank" is being defined. The term "recipe" is a commonly used term in the technical field of the present invention, and may be considered as a special case of a logical control object in which a sequence of actions is performed. For example, using the recipe "Tank", it is possible to configure specific values for parameters such as "Detergent", "Anti-Bacterial Agent", "Distilled Water", and so on. When a recipe is activated based on a suitable user input from the operator, a sequence of actions is triggered whereby the corresponding control parameters are set to specific values as defined in the recipe element.

In general, any preconfigured script that includes a set of computer readable instructions may be configured as a recipe logical control object.

As shown in FIG 4, such recipe based logical control objects may also be associated with desired alarm codes using an exemplary configuration interface 400. As previously stated in the context of general logical control objects, individual recipes may be defined specifically with a view to be associated with desired alarm codes and may not necessarily be placed on user interfaces developed for the target human-machine interface device.

Referring back to FIG 1, the correlation module 102 is configured for maintaining alarm codes along with corresponding logical control objects. Thus, desired alarm codes configured in the control system are associated with a set control parameters that may need to be altered in order to remediate an alarm condition.

In various exemplary embodiments of the present invention, the techniques of the present invention may specifically be used for such alarm conditions that are deemed to be critical, that is, those that are required to be remediated in a time-bound manner. However, in general, the techniques of the present invention may be applied to any alarm condition / alarm code if a time-efficient and a convenient remediation thereof is desired.

The rendering module 104 is configured for receiving at least one alarm message from the control system, and rendering the alarm message in the alarm display interface. In accordance with techniques of the present invention, the logical control objects corresponding to the relevant alarm code are bundled along with the alarm message before being provided to the rendering module 104 for rendering.

According to a key technical aspect of the present invention, the alarm message is rendered such that the logical control objects associated therewith are directly operable by an operator through the alarm display interface (as shown in FIGS 7 and 8).

It should be noted that various modules of the alarm management system 100 may be distributed across multiple computing devices. In an exemplary embodiment of the present invention, the configuration module 102 is deployed on the engineering station while the correlation module 104 and the rendering module 106 are deployed on the human-machine interface device.

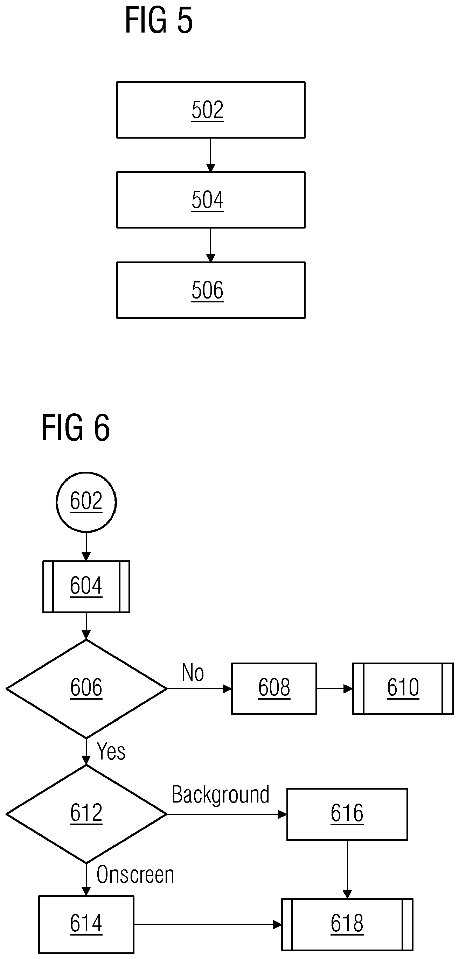

Referring now to FIG 5, a brief flowchart showing a method for alarm management is provided.

The method is suitable for use in a control system as described in the preceding description. Thus, the control system is configured for regulating one or more control parameters corresponding to at least one controlled system and/or controlled process in a technical installation. The control system is further configured for generating one or more alarm messages, wherein each alarm message is assigned an alarm code selected from a set of predefined alarm codes.

According to the method of the present invention, initially, at step 502, one or more logical control objects are defined for regulating one or more control parameters. One or more alarm codes are associated with one or more logical control objects.

At step 504, the information related to the alarm codes along with corresponding logical control objects is maintained. As already understood from the preceding description, the logical control objects are graphical objects that are linked to underlying control parameters that may be regulating through user interaction in a suitable manner.

At step 506, at least one alarm message from the control system is received and rendered, along with corresponding logical control objects associated with the corresponding alarm code, in an alarm display interface.

According to various exemplary embodiments of the present invention, the logical control objects are rendered such that they are operable to regulate the corresponding control parameters based on a user input therefor provided directly through the alarm display interface. Thus, the user does not need to navigate to any other user interface configured in the human-machine interface device.

Various alternatives are available for rendering the logical control objects along with the alarm message. In one implementation, the logical control objects are directly displayed along with the alarm message. In alternative implementations, the logical control objects are displayed based on a user input therefor provided through the alarm display interface.

As explained in the preceding description, a recipe, that is, a logical control object configured for triggering a sequence of actions to regulate multiple control parameters may also be associated with an alarm code.

The working principle of the present invention in an exemplary workflow thereof will further be explained now with reference to FIG 6.

Referring now to FIG 6, a detailed flowchart showing a method of the present invention is shown in accordance with an exemplary embodiment of the present invention.

At step 602, a runtime application is initialized. As explained earlier, an engineering station is used to design and develop a runtime application, which is then downloaded onto a human-machine interface device. According to the techniques of the present invention, a configuration module 102 is also deployed in the engineering station. The configuration module is used to associate one or more logical control objects with one or more alarm codes. Among other things, the runtime application is configured to monitor various control parameters associated with the control system and further configured to generate one or more alarm messages in case any of the control parameters or a combination thereof breaches a predefined boundary condition.

At step 604, the runtime application identified an alarm message generated therein and provides the same to the correlation module 104.

At step 606, the correlation module 104 determines if the alarm code corresponding to the alarm message is associated with any logical control objects. As mentioned earlier, in an exemplary embodiment of the present invention, various time critical alarm codes are associated with logical control objects while the non time-critical alarm codes are not.

At step 606, if it is determined that the alarm code is not associated with any logical control object then, at step 608, the alarm message is rendered. Eventually, at step 610, an operator acknowledges the alarm message in a predefined manner and thereby, the workflow corresponding to the alarm message is completed. On the other hand, at step 606, in case it is determined that the alarm code is actually associated with one or more logical control objects then, at step 612, it is determined if the relevant logical control objects are already available as part of the user interfaces configured for runtime application deployed on the human-machine interface device.

At step 612, if it is determined that an individual logical control object is already part of one of the user interfaces configured for the runtime application, then, at step 614, the logical control object is directly rendered in the alarm display interface. On the other hand, at step 612, if it is determined that the logical control object is not included in the user interfaces configured for the runtime application, then, at step 616, the logical control object is graphically drawn and rendered in the alarm display interface.

Eventually, at step 618, the operator acknowledges the alarm message and interacts with the logical control objects to affect necessary changes in the underlying control parameters; and thereby completes the workflow of the alarm message.

Referring now to FIGS 7 and 8, exemplary alarm display interfaces 700 and 800 are shown in accordance with an embodiment of the present invention.

The alarm display interfaces 700, 800 have a main window 702, 802 configured to display one or more alarms that are currently active (that is to say that the alarm was generated in the control system earlier and is still not resolved/addressed by an operator).

For each alarm listed in the main window 702, 802, corresponding logical control objects are also displayed along with the alarm message.

As can be seen in FIG 7, various logical control objects 704 are displayed in the alarm display interface 700 along with the alarm message. Similarly, as seen in FIG 8, a recipe logical control object is displayed in the alarm display interface 800.

It should be noted that FIG 7 and 8 provide only exemplary alarm display interfaces.

In an alternative embodiment of the present invention, the logical control object may be displayed only after receiving a suitable user input. In yet another exemplary embodiment, the logical control objects may be displayed in a pop-up window.

When the alarm display interfaces 700, 800 are configured for displaying the logical control object along with the alarm message, for convenience of the operator, suitable techniques for contracting or expanding the alarm message could be provided. Thus, in the contracted view, only the alarm message is visible, the operator may click on the alarm message whereby the alarm message is expanded to additionally display the list of control parameters included in the logical control objects.

Thus, in various alternative embodiments of the present invention, the logical control objects may be directly displayed along with the alarm message or may be displayed embedded in the same window (as that of the alarm message) or an additional (pop-up) window only after receiving a user input therefor.

In each of these alternative embodiments, the operator is able to provide user inputs to regulate values assigned to the associated control parameters in a required manner through the alarm display interface. When the logical control objects are displayed, the value of the corresponding control parameters may also be displayed in the alarm display interface 700, 800. The operator can alter the values of the control parameters in a desired manner. Thus, the operator does not need to navigate through a myriad of user interfaces otherwise provided in the human-machine interface device associated with the control system.

The present invention will now be explained with reference to an illustrative example below.

Consider a control system that is required to monitor liquid level inside a tank; an alarm should be raised whenever the liquid level rises beyond 70% of tank capacity.

The workflow according to the techniques of the present invention may be logically divided into two distinct phases. In a first phase (configuration phase), alarm codes/alarm messages and logical control objects are configured and an association there between is defined. In a second phase (runtime phase), whenever a stipulated alarm condition is determined in the control system, a relevant alarm message is generated and displayed along with corresponding logical control objects in an alarm display interface.

The configuration phase will now be described below.

The control system is configured to generate an alarm message as per the following attributes:
- Alarm Code: 123
- Alarm Text: 'Tank is 70% full'
- Alarm Class: Error
- Trigger Tag: HMI_Tag_1
- Limit: 70 (integer)
- Limit Mode: High Limit Violation

The engineering station, and in particular, a configuration module 102 deployed therein, is adapted to receive user inputs through suitable configuration interfaces (such as those shown in FIGS 2 and 4) to associate as many logical control objects as desired with individual alarm codes.

In examples shown in FIG 2, two logical control objects namely "*Button: Stop Inflow*" and "*Switch: Open Tap*" are associated with alarm code "123". In the instantaneous example, a first logical control object ("*Button: Stop Inflow*") is configured to stop an inflow of liquid to a tank and a second logical control object ("*Switch: Open Tap*") is configured to open the tank outlet tap. These two logical control objects are associated with the alarm code "123", which corresponds to an alarm condition that the liquid level in the tank is reaching more than 70% of total capacity of the tank.

It should be noted that inclusion of these two logical control objects in the user interfaces configured for the runtime application is optional. Thus, some logical control objects may be specifically designed and developed for rendering along with certain alarm messages and not necessarily be placed on the user interfaces configured for the runtime application.

As shown in FIG 3, a recipe labeled "*Tank*" is created with two recipe elements "*Sterilize Tank*" and "*Fill Tank with Coolant*". Each recipe element stipulates a unique proportion of control parameters such as "*Detergent*", "*Anti-Bacterial Agent*" and "*Distilled Water*". The required recipe element is associated with an alarm code as shown in FIG 4. In the instantaneous example, "*Fill Tank with Coolant*" recipe element is associated with the alarm code "2". When an alarm message with the alarm code "2" occurs in the control system, the operator may execute the recipe element, which is rendered in the alarm display interface, as shown in FIG 8. Upon execution, the tank is filled with distilled water. This recipe element "*Fill Tank with Coolant*" is associated with the alarm code but not included in any of the user interfaces configured for the runtime application in order to perform the stipulated action only when the coolant level in the tank hits the bottom, that is, the tank becomes empty.

The runtime phase will now be explained below.

With regard to the techniques of the present invention, the runtime phase is related to recreation of alarm messages with associated logical control objects.

During plant operation whenever the stipulated alarm condition is identified, an appropriate alarm message is generated. The alarm management system of the present invention, in particular the correlation module identifies any associated logical control objects for the alarm message. If the associated logical control objects are already configured in one of the user interfaces of the runtime application, then such logical control objects are rendered in the alarm display interface by redrawing the same. In case the logical control objects are already part of the runtime application, then they are drawn after the generation of the alarm message and displayed therewith in the alarm display interface.

In the instantaneous example, during runtime phase, if the liquid level in the tank rises beyond 70%, an alarm message is generated. The associated logical control objects "*Button: Stop Inflow*" and "*Switch: Open Tap*" are also rendered along with the alarm message in the alarm display interface, as shown in FIG 7.

Similarly, when the coolant level in the tank hits the bottom, a corresponding alarm message, with alarm code "2" and alarm text "*Tank is empty*", is generated and rendered along with recipe element "*Fill Tank with Coolant*", as shown in FIG 8. The operator provides a suitable user input to trigger a sequence of actions as configured in the recipe element "*Fill Tank with Coolant*". The recipe element is configured to ensure that the tank is filled with distilled water in a desired manner.

Thus, the present invention provides an alarm management system and a method therefor such that various alarm conditions occurring in a control system are duly addressed in a time-efficient and convenient manner. Further, the dependence on training and skill development of individual operators is reduced.

The present invention offers several advantages over prior art techniques. In particular, the time required to act on various alarm conditions is significantly reduced, thereby leading to more efficient and trouble-free operation of the corresponding technical installation.

According to the techniques of the present invention, the logical control objects that may be associated with any given alarm code are not limited to those that are already included in the user interfaces of the runtime application. Thus, actual number of logical control objects included in the user interfaces of the runtime application may be significantly reduced, thereby, making the same clutter-free. The present invention facilitates defining scripts and associating them with individual alarm codes, thus an operator is able to execute a desired sequence of operations with a single user input.

Various domain experts may be engaged during the configuration phase of the present invention. On one hand, the option for manual configuration of logical control objects helps to document the knowledge of domain experts for training of newly appointed operators. On the other hand, this helps in reducing the dependence on training and skill development of the newly recruited operators required during the runtime phase of the present invention since the alarm management system doubles up as recommendation system providing indications as to which control parameters should be altered in order to address any given alarm message.

The present invention can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk, Current examples of optical disks include compact disk--read only memory (CD-ROM), compact disk--read/write (CD-R/W) and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would present themselves, to those of skill in the art without departing from the scope of various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. An alarm management system (100) suitable for use in a control system,
1.1 said control system being configured for regulating one or more control parameters corresponding to at least one controlled system and/or controlled process in a technical installation,
1.2 said control system being configured for generating one or more alarm messages, wherein each alarm message is assigned an alarm code selected from a set of predefined alarm codes associated with a set of control parameters that need to be altered to remediate an alarm condition, said alarm management system (100), comprising:
1.3 a configuration module (102), said configuration module (102) being adapted for defining one or more logical control objects (704, 804) for regulating said control parameters to address the individual alarm condition, and further adapted for linking the one or more logical control objects (704, 804) with at least one alarm code based on a user input therefor,
1.4 wherein the one or more logical control objects comprises graphical objects linked to the one or more control parameters, the logical control objects directly accessible for regulating the control parameters to remediate the alarm condition,
1.5 a correlation module (104), said correlation module (104) being configured for maintaining information related to said alarm code along with the corresponding logical control objects (704, 804), the correction module identifying any associated logical control objects for the alarm message; and
1.6 a rendering module (106), said rendering module (106) being configured for receiving at least one alarm message from said control system, and adapted for rendering said alarm message, along with corresponding logical control objects (704, 804) based on said alarm code thereof, in an alarm display interface (700, 800);
1.7 wherein said alarm message is rendered such that each of said logical control objects (704, 804) therein is operable based on a user input therefor provided through said alarm display interface (700, 800).

2. The alarm management system (100) according to claim 1, wherein said logical control objects (704, 804) are directly displayed along with said alarm message.

3. The alarm management system (100) according to claim 1, wherein said logical control objects (704, 804) are displayed based on a user input therefor provided through said alarm display interface (700, 800).

4. The alarm management system (100) according to any of the preceding claims, wherein at least one of said logical control object (704, 804) is adapted for triggering a predefined sequence of actions in said control system.

5. A method for alarm management suitable for use in a control system,
5.1 said control system being configured for regulating one or more control parameters corresponding to at least one controlled system and/or controlled process in a technical installation,
5.2 said control system being further configured for generating one or more alarm messages, wherein each alarm message is assigned an alarm code selected from a set of predefined alarm codes associated with a set of control parameters that need to be altered to remediate an alarm condition, said method comprising the following steps:
5.3 defining (502) one or more logical control objects (704, 804) for regulating said control parameters to address an individual alarm condition, and linking the one or more logical control objects (704, 804) with at least one alarm code based on a user input therefor,
5.4 wherein the one or more logical control objects comprises graphical objects linked to the one or more control parameters, the logical control objects directly accessible for regulating the control parameters to remediate the alarm condition,
5.5 maintaining (504) information related to said alarm code along with the corresponding logical control objects (704, 804) by a correction module, the correction module identifying any associated logical control objects for the alarm message;, and
5.6 receiving (506) at least one alarm message from said control system, and rendering said alarm message, along with corresponding logical control objects (704, 804) based on said alarm code thereof, in an alarm display interface (700, 800); wherein
5.7 said alarm message is rendered such that each of said logical control objects (704, 804) therein is operable based on a user input therefor provided through said alarm display interface (700, 800) .

6. The method according to claim 5, wherein said logical control objects (704, 804) are directly displayed along with said alarm message.

7. The method according to claim 5, wherein said logical control objects (704, 804) are displayed based on a user input therefor provided through said alarm display interface (700, 800) .

8. The method according to any of the preceding claims, wherein at least one of said logical control object (704, 804) is adapted for triggering a predefined sequence of actions in said control system.

## Patentansprüche

1. Alarmverwaltungssystem (100), das zur Verwendung in einem Steuerungssystem geeignet ist,
1.1 wobei das Steuerungssystem konfiguriert ist, um einen oder mehrere Steuerparameter zu regeln, die mindestens einem gesteuerten System und/oder gesteuerten Prozess in einer technischen Installation entsprechen,
1.2 das Steuerungssystem konfiguriert ist, um eine oder mehrere Alarmmeldungen zu generieren, wobei jeder Alarmmeldung ein Alarmcode zugewiesen ist, der aus einem Satz vordefinierter Alarmcodes ausgewählt ist, die einem Satz von Steuerparametern zugeordnet sind, die geändert müssen, um einen Alarmzustand zu beheben, wobei das Alarmverwaltungssystem (100) umfasst:
1.3 ein Konfigurationsmodul (102), wobei das Konfigurationsmodul (102) vorgesehen ist, um ein oder mehrere logische Steuerobjekte (704, 804) zu definieren, um die Steuerparameter zu regeln, um sich des individuellen Alarmzustands anzunehmen, und des Weiteren vorgesehen ist, um das eine oder die mehreren logischen Steuerobjekte (704, 804) basierend auf einer Benutzereingabe dafür mit mindestens einem Alarmcode zu verknüpfen,
1.4 wobei das eine oder die mehreren logischen Steuerobjekte grafische Objekte umfassen, die mit dem einen oder den mehreren Steuerparametern verknüpft sind, wobei die logischen Steuerobjekte direkt zugänglich sind, um die Steuerparameter zu regeln, um den Alarmzustand zu beheben,
1.5 ein Korrelationsmodul (104), wobei das Korrelationsmodul (104) konfiguriert ist, um Informationen, welche den Alarmcode betreffen, zusammen mit den entsprechenden logischen Steuerobjekten (704, 804) zu halten, wobei das Korrekturmodul jegliche zugeordneten logischen Steuerobjekte für die Alarmmeldung identifiziert; und
1.6 ein Aufbereitungsmodul (106), wobei das Aufbereitungsmodul (106) konfiguriert ist, um mindestens eine Alarmmeldung von dem Steuerungssystem zu empfangen, und vorgesehen ist, um die Alarmmeldung zusammen mit entsprechenden logischen Steuerobjekten (704, 804) basierend auf dem Alarmcode dafür in einer Alarmanzeigeschnittstelle (700, 800) aufzubereiten;
1.7 wobei die Alarmmeldung so aufbereitet wird, dass jedes von den logischen Steuerobjekten (704, 804) darin basierend auf einer Benutzereingabe dafür funktional ist, die durch die Alarmanzeigeschnittstelle (700, 800) bereitgestellt wird.

2. Alarmverwaltungssystem (100) nach Anspruch 1, wobei die logischen Steuerobjekte (704, 804) direkt zusammen mit der Alarmmeldung angezeigt werden.

3. Alarmverwaltungssystem (100) nach Anspruch 1, wobei die logischen Steuerobjekten (704, 804) basierend auf einer Benutzereingabe dafür angezeigt werden, die durch die Alarmanzeigeschnittstelle (700, 800) bereitgestellt wird.

4. Alarmverwaltungssystem (100) nach einem der vorhergehenden Ansprüche, wobei mindestens eines von dem logischen Steuerobjekt (704, 804) vorgesehen ist, um eine vordefinierte Abfolge von Aktionen in dem Steuerungssystem auszulösen.

5. Verfahren zur Alarmverwaltung, das zur Verwendung in einem Steuerungssystem geeignet ist,
5.1 wobei das Steuerungssystem konfiguriert ist, um einen oder mehrere Steuerparameter zu regeln, die mindestens einem gesteuerten System und/oder gesteuerten Prozess in einer technischen Installation entsprechen,
5.2 das Steuerungssystem des Weiteren konfiguriert ist, um eine oder mehrere Alarmmeldungen zu generieren, wobei jeder Alarmmeldung ein Alarmcode zugewiesen ist, der aus einem Satz vordefinierter Alarmcodes ausgewählt ist, die einem Satz von Steuerparametern zugeordnet sind, die geändert werden müssen, um einen Alarmzustand zu beheben, wobei das Verfahren die folgenden Schritte umfasst:
5.3 Definieren (502) von einem oder mehrere logischen Steuerobjekten (704, 804), um die Steuerparameter zu regeln, um sich des individuellen Alarmzustands anzunehmen, und des Weiteren Verknüpfen des einen oder der mehreren logischen Steuerobjekte (704, 804) basierend auf einer Benutzereingabe dafür mit mindestens einem Alarmcode,
5.4 wobei das eine oder die mehreren logischen Steuerobjekte grafische Objekte umfassen, die mit dem einen oder den mehreren Steuerparametern verknüpft sind, wobei die logischen Steuerobjekte direkt zugänglich sind, um die Steuerparameter zu regeln, um den Alarmzustand zu beheben,
5.5 Halten (504) von Informationen, welche den Alarmcode betreffen, zusammen mit den entsprechenden logischen Steuerobjekten (704, 804) durch ein Korrekturmodul, wobei das Korrekturmodul jegliche zugeordneten logischen Steuerobjekte für die Alarmmeldung identifiziert; und
5.6 Empfangen (506) von mindestens einer Alarmmeldung von dem Steuerungssystem, und Aufbereiten der Alarmmeldung zusammen mit entsprechenden logischen Steuerobjekten (704, 804) basierend auf dem Alarmcode dafür in einer Alarmanzeigeschnittstelle (700, 800); wobei
5.7 die Alarmmeldung so aufbereitet wird, dass jedes von den logischen Steuerobjekten (704, 804) darin basierend auf einer Benutzereingabe dafür funktional ist, die durch die Alarmanzeigeschnittstelle (700, 800) bereitgestellt wird.

6. Verfahren nach Anspruch 5, wobei die logischen Steuerobjekte (704, 804) direkt zusammen mit der Alarmmeldung angezeigt werden.

7. Verfahren nach Anspruch 5, wobei die logischen Steuerobjekte (704, 804) basierend auf einer Benutzereingabe dafür angezeigt werden, die durch die Alarmanzeigeschnittstelle (700, 800) bereitgestellt wird.

8. Verfahren nach einem der vorhergehenden Ansprüche, wobei mindestens eines von dem logischen Steuerobjekt (704, 804) vorgesehen ist, um eine vordefinierte Abfolge von Aktionen in dem Steuerungssystem auszulösen.

## Revendications

1. Système de gestion d'alarme (100) convenant à une utilisation dans un système de contrôle,
1.1 ledit système de contrôle étant configuré pour réguler un ou plusieurs paramètres de contrôle correspondant à un système contrôle et/ou à un processus contrôlé dans une installation technique,
1.2 ledit système de contrôle étant configuré pour générer un ou plusieurs messages d'alarme, chaque message d'alarme se voyant attribuer un code d'alarme sélectionné dans un ensemble de codes d'alarme prédéfinis associés à un ensemble de paramètres de contrôle qui doivent être modifiés pour corriger une condition d'alarme, ledit système de gestion d'alarme (100) comprenant :
1.3 un module de configuration (102), ledit module de configuration (102) étant conçu pour définir un ou plusieurs objets de contrôle logiques (704, 804) pour réguler lesdits paramètres de contrôle pour résoudre la condition d'alarme individuelle, et conçu en outre pour lier le ou les objets de contrôle logiques (704, 804) à au moins un code d'alarme sur la base d'une entrée d'utilisateur correspondante,
1.4 le ou les objets de contrôle logiques comprenant des objets graphiques liés au ou aux paramètres de contrôle, les objets de contrôle logiques étant accessibles directement pour réguler les paramètres de contrôle pour corriger la condition d'alarme ;
1.5 un module de corrélation (104), ledit module de corrélation (104) étant configuré pour tenir à jour une information relative audit code d'alarme conjointement avec les objets de contrôle logiques (704, 804), le module de correction identifiant n'importe quels objets de contrôle logiques associés pour le message d'alarme ; et
1.6 un module de restitution (106), ledit module de restitution (106) étant configuré pour recevoir au moins un message d'alarme en provenance dudit système de contrôle et conçu pour restituer ledit message d'alarme, conjointement avec des objets de contrôle logiques (704, 804) correspondants sur la base dudit code d'alarme correspondant, sur une interface d'affichage d'alarme (700, 800),
1.7 ledit message d'alarme étant restitué de sorte que chacun desdits objets de contrôle logiques (704, 804) y inclus soit fonctionnel sur la base d'une entrée d'utilisateur correspondante fournie par l'intermédiaire de ladite interface d'affichage d'alarme (700, 800).

2. Système de gestion d'alarme (100) selon la revendication 1, dans lequel lesdits objets de contrôle logiques (704, 804) sont affichés directement conjointement avec ledit message d'alarme.

3. Système de gestion d'alarme (100) selon la revendication 1, dans lequel lesdits objets de contrôle logiques (704, 804) sont affichés sur la base d'une entrée d'utilisateur correspondante fournie par l'intermédiaire de ladite interface d'affichage d'alarme (700, 800).

4. Système de gestion d'alarme (100) selon l'une quelconque des revendications précédentes, dans lequel au moins un desdits objets de contrôle logiques (704, 804) est conçu pour déclencher une séquence prédéfinie d'actions dans ledit système de contrôle.

5. Procédé de gestion d'alarme convenant à une utilisation dans un système de contrôle,
5.1 ledit système de contrôle étant configuré pour réguler un ou plusieurs paramètres de contrôle correspondant à un système contrôle et/ou à un processus contrôlé dans une installation technique,
5.2 ledit système de contrôle étant en outre configuré pour générer un ou plusieurs messages d'alarme, chaque message d'alarme se voyant attribuer un code d'alarme sélectionné dans un ensemble de codes d'alarme prédéfinis associés à un ensemble de paramètres de contrôle qui doivent être modifiés pour corriger une condition d'alarme, ledit procédé comprenant les étapes suivantes consistant à :
5.3 définir (502) un ou plusieurs objets de contrôle logiques (704, 804) pour réguler lesdits paramètres de contrôle pour résoudre une condition d'alarme individuelle, et lier le ou les objets de contrôle logiques (704, 804) à au moins un code d'alarme sur la base d'une entrée d'utilisateur correspondante,
5.4 le ou les objets de contrôle logiques comprenant des objets graphiques liés au ou aux paramètres de contrôle, les objets de contrôle logiques étant accessibles directement pour réguler les paramètres de contrôle pour corriger la condition d'alarme ;
5.5 tenir à jour (504) une information relative audit code d'alarme conjointement avec les objets de contrôle logiques (704, 804) par un module de correction, le module de correction identifiant n'importe quels objets de contrôle logiques associés pour le message d'alarme ; et
5.6 recevoir (506) au moins un message d'alarme en provenance dudit système de contrôle et restituer ledit message d'alarme, conjointement avec des objets de contrôle logiques (704, 804) correspondants sur la base dudit code d'alarme correspondant, sur une interface d'affichage d'alarme (700, 800),
5.7 ledit message d'alarme étant restitué de sorte que chacun desdits objets de contrôle logiques (704, 804) y inclus soit fonctionnel sur la base d'une entrée d'utilisateur correspondante fournie par l'intermédiaire de ladite interface d'affichage d'alarme (700, 800).

6. Procédé selon la revendication 5, dans lequel lesdits objets de contrôle logiques (704, 804) sont affichés directement conjointement avec ledit message d'alarme.

7. Procédé selon la revendication 5, dans lequel lesdits objets de contrôle logiques (704, 804) sont affichés sur la base d'une entrée d'utilisateur correspondante fournie par l'intermédiaire de ladite interface d'affichage d'alarme (700, 800) .

8. Procédé selon l'une quelconque des revendications précédentes, dans lequel au moins un desdits objets de contrôle logiques (704, 804) est conçu pour déclencher une séquence prédéfinie d'actions dans ledit système de contrôle.
